# EUROPÄISCHE PATENTSCHRIFT

(11) **EP 3 876 061 B1**
(45) Veröffentlichungstag und Bekanntmachung des Hinweises auf die Patenterteilung: **09.11.2022**
(21) Anmeldenummer: 21159829.7
(22) Anmeldetag: 01.03.2021
(51) Int. Cl.: G06N 3/04, G06N 3/08, G06N 20/00, G05B 23/02, G05B 17/02

(54) **VERFAHREN ZUR VALIDIERUNG UND AUSWAHL AUF MASCHINELLEM LERNEN BASIERENDER MODELLE ZUR ZUSTANDSÜBERWACHUNG EINER MASCHINE**
METHOD FOR VALIDATION AND SELECTION ON MACHINE LEARNING BASED MODELS FOR MONITORING THE STATE OF A MACHINE
PROCÉDÉ DE VALIDATION ET DE SÉLECTION DE MODÈLES BASÉS SUR L'APPRENTISSAGE AUTOMATIQUE DESTINÉ À LA SURVEILLANCE D'ÉTAT D'UNE MACHINE

(30) Priorität: 06.03.2020 DE 102020202870
(43) Veröffentlichungstag der Anmeldung: 08.09.2021
(73) Patentinhaber: Robert Bosch GmbH, 70442 Stuttgart (DE)
(72) Erfinder: Torikka, Tapio, 97816 Lohr (DE)

(56) Entgegenhaltungen:
- DE-A1-102018 218 586
- DE-A1-102020 115 561
- US-A1- 2018 356 807
- US-A1- 2019 026 632

## Beschreibung

Die vorliegende Erfindung betrifft ein Verfahren zur Validierung und Auswahl mindestens eines Modells zur Überwachung des Zustands einer Maschine aus einem ersten Satz von Modellen. Insbesondere betrifft die Erfindung die Validierung und Auswahl zur Maschinenüberwachung geeigneter Modelle aus einem oder mehreren Modellen.

### Stand der Technik

Auf maschinellem Lernen basierende mathematische Modelle können im Rahmen vorausschauender Instandhaltungskonzepte eingesetzt werden, um Betriebszustände von Maschinen in Industrieanlagen zu klassifizieren und um insbesondere anomale Betriebszustände zu erkennen, die auf eine Fehlfunktion der Maschine hinweisen. Für das Training dieser mathematischen Modelle bzw. Algorithmen können als Trainingsdaten Beispiel- bzw. Referenzdaten verwendet werden, die während des Betriebs der Maschine erfasst wurden. Das Modell lernt während des Trainings Betriebszustände der Maschine, die durch die Trainingsdaten charakterisiert sind, zu erkennen. Nach dem Training sind Aussagen über den Betriebszustand der Maschine möglich, indem die trainierten Modelle auf neu erfasste Betriebsdaten der Maschine angewendet werden.

Die Beispieldaten, die beim Training verwendet werden, werden typischerweise während des normalen Betriebs einer Maschine erfasst. Da die Produktion in modernen Industrieanlagen überwiegend fehlerfrei verläuft, enthalten diese Beispieldaten wenige oder gar keine Daten zu fehlerhaften Zuständen. Entsprechend können die mit maschinellem Lernen erhaltenen Modelle nicht "lernen", anomale Zustände bzw. Fehlerzustände zu erkennen, da diese in den Trainingsdaten nicht enthalten sind. Hier ist es auch nicht möglich, Prüfstandsdaten zu verwenden, da die Maschinen in der Praxis beim realen Einsatz anderes aufgebaut sind und anderes betrieben werden als am Prüfstand. Daten, die am Prüfstand, wo z.B. gezielt ein Fehlerzustand erzeugt wurde, erfasst wurden, können also nicht übertragen werden.

Da keine Daten über Fehlerzustände und entsprechend auch keine Fehlermetrik für die Betriebszustände von Maschinen existieren, kommen in der Praxis auf maschinellem Lernen basierende Algorithmen zum Einsatz, die durch unüberwachtes Lernen trainiert werden, Betriebszustände zu codieren und zu klassifizieren. Allerdings findet kein Training bezüglich anomaler Zustände statt, da diesbezügliche Daten fehlen.

### Offenbarung der Erfindung

Erfindungsgemäß werden ein Verfahren zur Validierung und Auswahl mindestens eines Modells zur Überwachung des Zustands einer Maschine, eine entsprechende Recheneinheit, ein entsprechendes Computerprogramm und ein entsprechendes Speichermedium mit den Merkmalen der unabhängigen Patentansprüche vorgeschlagen. Vorteilhafte Ausgestaltungen sind Gegenstand der Unteransprüche sowie der nachfolgenden Beschreibung.

Durch die Erfindung wird die Validierung und Auswahl von auf maschinellem Lernen basierenden Modellen ermöglicht, die in der Lage sind, anomale Betriebszustände einer Maschine ohne vorheriges explizites Training bzw. Lernen dieser anomalen Zustände zu erkennen.

Das Verfahren zur Validierung und Auswahl mindestens eines Modells zur Überwachung des Zustands einer Maschine aus einem mindestens ein Modell umfassenden ersten Satz von Modellen mittels unzulässiger Betriebsparameter-Werte betrifft Modelle, die mittels maschinellem Lernen trainierte Algorithmen sind, die Betriebszustände einer Maschine basierend auf Betriebsparametern, die Betriebszustände der Maschine charakterisieren, modellieren, wobei die Modelle mittels eines Referenzdatensatzes der Betriebsparameter trainiert werden, wobei die Modelle durch Parameterkonfigurationen charakterisiert sind, die für unterschiedliche Modelle unterschiedlich sind. Das Verfahren umfasst a) ein Erzeugen eines oder mehrerer Prüfdatensätze aus dem Referenzdatensatz, wobei jeweils mindestens ein Wert wenigstens eines Betriebsparameters in dem Referenzdatensatz durch einen entsprechenden unzulässigen Betriebsparameter-Wert ersetzt wird; b) für jedes Modell aus dem Satz von Modellen ein Anwenden des Modells auf jeden Prüfdatensatz des einen oder der mehreren Prüfdatensätze, um Fehlerwerte des Modells bezüglich jedem Prüfdatensatz zu bestimmen, und ein Bestimmen eines Distanzwertes des Modells basierend auf den Fehlerwerten des Modells; und c) ein Auswählen eines oder mehrerer Modelle basierend auf der Größe der Distanzwerte.

Die Distanzwerte geben an, welchen Abstand von den Referenzdatensätzen ein Modell den Prüfdatensätzen zuweist. Entsprechend können durch die auf der Größe der Distanzwerte basierende Auswahl besonders geeignete Modelle bestimmt werden.

Unter "Betriebsparameter" einer Maschine sollen Daten verstanden werden, die erfasst werden, um den Betrieb der Maschine zu überwachen. Die Erfassung kann z.B. in regelmäßigen Zeitabständen erfolgen. Die entsprechenden konkreten Werte der Betriebsparameter sind dann Betriebsparameter-Werte. Solche Werte sind dann in den jeweiligen Datensätzen enthalten. Insbesondere handelt es sich hierbei um Sensorwerte, die durch an der Maschine angeordnete Sensoren gemessen werden. Es kann sich aber auch um vorgegebene, etwa durch die Steuerung der Maschine, Parameter handeln. Weiter ist es möglich, dass die Betriebsdaten bereits vorverarbeitete Daten umfassen, etwa Werte einer schnellen FourierTransformation (FFT) regelmäßiger Messwerte. Bei der zu überwachenden Maschine kann es sich beispielsweise um eine Hydraulikanlage handeln; in diesem Fall können die Sensordaten beispielhaft ausgewählt sein aus Druck und Volumenstrom von Hydraulikflüssigkeiten, Temperaturen von Hydraulikflüssigkeiten oder Maschinenteilen, Stellungen eines Hydraulikzylinders oder auch Drehmoment, Leistungsabgabe von Motoren, die Pumpen antreiben.

Der Begriff "unzulässige Betriebsparameter-Werte" bezeichnet Werte der Betriebsparameter, die während des normalen, fehlerfreien Betriebs der Maschine nicht auftreten. Es sind also nicht-zulässige Betriebsparameter-Werte bzw. nicht-realisierbare Betriebsparameter-Werte. Solche Werte sind durch Domänenwissen bekannt. Hierunter sind nicht nur Werte zu verstehen, die z.B. physikalisch nicht möglich sind, sondern auch im Prinzip mögliche Werte, die Extremzustände darstellen, die normalerweise nicht auftreten können. Insbesondere sind Extremwerte von Betriebsparametern, die etwas außerhalb des Bereichs von Werten liegen, die beim normalen, störungsfreien Betrieb der Maschine auftreten. Insbesondere sind davon Werte umfasst, die an der Grenze zwischen unmöglich und gerade eben noch machbar liegen. Ein Beispiel für einen bekannten Extremzustand bei einer hydraulischen Maschine ist eine Tanktemperatur von 100 °C. Weiter soll der Begriff nicht nur Werte einzelner Betriebsparameter umfassen, die für sich alleine genommen bereits nicht zulässig sind, sondern auch Kombinationen von Werten mehrerer Betriebsparameter, wobei die einzelnen Werte für sich genommen zwar zulässig sind, allerdings die Kombination nicht zulässig ist. Der Begriff "unzulässige Betriebsparameter-Werte" soll also "unzulässige Kombination von Betriebsparameter-Werten" einschließen. Ein einfaches Beispiel hierfür sind die Messwerte benachbarter Temperatursensoren, die bei normalem Betrieb eine starke Korrelation aufweisen und für die entsprechend die Angabe stark unterschiedlicher Temperaturwerte eine unzulässige Kombination von Betriebsparameter-Werten darstellt. Die unzulässigen Betriebsparameter-Werte (und auch unzulässige Kombinationen) sind in einem Fehlerdatensatz enthalten.

Im Folgenden werden der Begriff "Modell", wie er im Rahmen dieser Erfindung verwendet wird, und Maschinen-Überwachungsverfahren, die auf diesen Modellen basieren, kurz erläutert. Unter Modell ist die Modellierung von Betriebszuständen bzw. von deren gemessenen Betriebsparametern durch einen auf künstlicher Intelligenz bzw. maschinellem Lernen basierenden Algorithmus zu verstehen. In einem als Training oder Lernen bezeichneten Vorgang generieren Algorithmen des maschinellen Lernens basierend auf Beispieldaten (sogenannten Trainingsdaten) ein mathematisches Modell, um Vorhersagen über einen Vorgang (hier Betriebszustände einer Maschine) zu machen, ohne dafür explizit programmiert zu sein. Ein Modell kann als eine Abbildung bzw. Funktion betrachtet werden, die Eingabewerte, hier die Betriebsparameter der zu überwachenden Maschine, auf Ausgabewerte abbildet.

Die spezielle Art und der innere Aufbau des Modells bzw. des Algorithmus sind für die Durchführung des erfindungsgemäßen Verfahrens nicht essentiell, es muss sich lediglich um ein Modell handeln, das einen Satz (Vektor) von Eingabewerten - das sind hier die Werte von Betriebsparametern -auf eine Ausgabe abbildet, aus der ein Fehler (Fehlerwert) abgeleitet werden kann, der eine Entfernung von im Modell codierten Referenz-Betriebszuständen angibt, wobei diese Entfernung im Sinne eines Fehlermaßes des Modells gemessen wird. Die Referenz-Betriebszustände werden im Modell durch maschinelles Lernens codiert, wobei das Modell anhand von Trainingsdaten bzw. Referenzdaten, die die Referenz-Betriebszustände charakterisieren, trainiert wird. Das Training erfolgt normalerweise so, dass der Fehlerwert der Trainingsdatensätze bezüglich des Fehlermaßes minimiert wird. Die Trainingsdaten beinhalten Betriebsparameter-Werte, die beispielsweise während eines Referenzbetriebs der Maschine erfasst wurden.

Für die Fehlerüberwachung von Maschinen werden insbesondere Modelle eingesetzt, die die Betriebszustände so modellieren, dass die Eingabewerte, also die Betriebsparameter-Werte, als Ausgabewerte des Modells zurückgewonnen werden. Sozusagen rekonstruiert das Modell die Eingabe, entsprechende Modelle könnten also als "Rekonstruktions-Modell" oder "rekonstruierendes Modell" bezeichnet werden. Eine Fehlermetrik (Fehlermaß) kann dann durch einen Vergleich der Ausgabewerte mit den eingegebenen Betriebsparametern (die ja die Eingabewerte des Modells sind) erhalten werden, etwa als mittlere quadratische Abweichung. Modelle, die von Maschinenüberwachungsverfahren zur Anomalieerkennung eingesetzt werden, sind typischerweise so gewählt, dass innerhalb des Modells eine dimensionale Reduktion der Parameter erfolgt (ein Nachbilden der identischen Abbildung ist also nicht möglich). Ein Betriebszustand ist dann sozusagen durch das Modell in einem dimensional reduzierten Raum codiert. Das Modell erzeugt die Ausgabewerte aus diesem dimensional reduzierten Raum, dies kann als Decodierung gesehen werden. Tritt in der überwachten, durch das Modell modellierten Maschine eine Anomalie bzw. Fehlfunktion auf, führt dies zu Abweichungen der Betriebsparameter, die durch die Codierung nicht mehr umfasst sind, so dass die Fehlermetrik, die als Anomaliemaß dient, einen höheren Wert ergibt. Liegt der durch die Fehlermetrik bestimmte Fehler über einer vorgegebenen Fehlergrenze des Modells, so wird von einem anomalen bzw. fehlerhaften Betriebszustand der Maschine ausgegangen. Der Einsatz solcher Modelle zur Anomalieerkennung und zur Überwachung von Betriebszuständen von Maschinen ist im Prinzip bekannt. Typischerweise sind die Modelle als (künstliche) neuronale Netzwerke, z.B. Autoencoder, verwirklicht.

Gemäß einer Ausführungsform kann eine Anzahl von Modellen mit den größten Distanzwerten ausgewählt werden. Der Distanzwert eines Modells gibt an, wie weit (im Sinne eines Fehlermaßes des Modells) die Prüfdatensätze von den im Modell codierten Referenzzuständen entfernt sind; entsprechend dieser Ausführungsform werden also die Modell ausgewählt, die die größten Abstände für die Prüfdatensätze anzeigen. Weiter bevorzugt ist die Anzahl gleich Eins, d.h. es wird das Modell mit dem größten Distanzwert ausgewählt.

Vorteilhafterweise wird der Distanzwert des jeweiligen Modells so bestimmt, dass er einem Wert entspricht, der ausgewählt ist aus: dem kleinsten der Fehlerwerte des Modells, dem größten der Fehlerwerte des Modells, dem Mittelwert der Fehlerwerte des Modells. Mit diesen verschiedenen möglichen Methoden können verschiedene Aspekte der Fehlerwerte betont werden. Weiter bevorzugt wird für alle Modelle der Distanzwert mit der gleichen Methode bestimmt, dadurch wird eine bessere Vergleichbarkeit der Distanzwerte gewährleistet.

Gemäß einer Ausführungsform kann Schritt b) weiterhin ein Verwerfen des Modells umfassen, falls mindestens einer der Fehlerwerte kleiner als eine vorbestimmte maximale Fehlergrenze des Modells ist. Dadurch können Modelle von der Auswahl ausgeschlossen werden, die nicht in der Lage sind, Prüfdatensätze, die ja nach Konstruktion als anomale Zustände charakterisieren sollen, von Datensätzen, die reguläre Betriebszustände charakterisieren, zu unterscheiden.

Gemäß einer Ausgestaltung dieser Ausführungsform kann das Verfahren, wenn alle Modelle verworfen werden, weiter umfassen ein Definieren eines zweiten Satzes von Modellen, der mindestens ein Modell umfasst, wobei unterschiedliche Modelle mit unterschiedlichen Parameterkonfigurationen definiert werden, und die Parameterkonfigurationen der Modelle des zweiten Satzes von Modellen verschieden von den Parameterkonfigurationen der Modelle des ersten Satzes von Modellen sind; ein Trainieren der Modelle des zweiten Satzes von Modellen mittels des Referenzdatensatzes; und ein Durchführen der Schritte b) und c) für den zweiten Satz von Modellen.

Entsprechend dieser Ausgestaltung wird ermöglicht, das Verfahren auf einen zweiten, geänderten Satz von Modellen anzuwenden, wenn kein valides Modell im ersten, ursprünglichen ersten Satz von Modellen gefunden werden kann. Dies kann für weitere geänderte Sätze von Modellen durchgeführt werden, falls auch im zweiten Satz von Modellen kein valides Modell gefunden werden kann.

Vorteilhafterweise sind die Modelle als neuronale Netze, insbesondere Autoencoder, implementiert, wobei die Parameterkonfiguration eine Anzahl von Schichten, eine Anzahl von Neuronen für jede der Schichten, und/oder eine Anzahl von Epochen umfasst. Neuronale Netze und deren Training sind dem Fachmann bekannt, so dass die Verwendung neuronaler Netze eine effektive Durchführung des Verfahrens gewährleistet.

Gemäß einer Ausführungsform kann das Verfahren weiterhin ein Speichern der Parameterkonfiguration des ausgewählten mindestens einen Models umfassen. Dadurch kann ein ausgewähltes Modell auch für andere, ähnliche Maschinen verwendet oder zumindest als Ausgangspunkt für zu trainierende Modelle dienen.

Eine erfindungsgemäße Recheneinheit, z.B. ein Steuergerät einer Hydraulikanlage, ist, insbesondere programmtechnisch, dazu eingerichtet, ein erfindungsgemäßes Verfahren durchzuführen.

Auch die Implementierung eines erfindungsgemäßen Verfahrens in Form eines Computerprogramms oder Computerprogrammprodukts mit Programmcode zur Durchführung aller Verfahrensschritte ist vorteilhaft, da dies besonders geringe Kosten verursacht, insbesondere wenn ein ausführendes Steuergerät noch für weitere Aufgaben genutzt wird und daher ohnehin vorhanden ist. Geeignete Datenträger zur Bereitstellung des Computerprogramms sind insbesondere magnetische, optische und elektrische Speicher, wie z.B. Festplatten, Flash-Speicher, EEPROMs, DVDs u.a.m. Auch ein Download eines Programms über Computernetze (Internet, Intranet usw.) ist möglich.

Das Verfahren kann insbesondere auf einem entfernten Computer oder Computersystem durchgeführt werden. Das Computerprogramm bzw. Computerprogrammprodukt kann dementsprechend insbesondere dazu eingerichtet sein bzw. programmiert sein, auf einem entfernten Computer oder Computersystem durchgeführt zu werden. "Entfernt" ist hier so zu verstehen, dass der Computer oder das Computersystem nicht in die zu überwachende Maschine integriert ist und sich im Allgemeinen auch nicht in der Nähe derselben befindet, z.B. nicht in einer Fabrik, in der sich die Maschine befindet. Es kann sich also um einen entfernten Server, z.B. einen sogenannten Cloud-Server, handeln, der insbesondere über ein Netzwerk, z.B. das Internet und/oder ein Intranet, mit der Maschine bzw. den Sensoren, die Betriebsparameter erfassen, verbunden sein kann.

Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in der Zeichnung schematisch dargestellt und wird im Folgenden unter Bezugnahme auf die Zeichnung ausführlich beschrieben.

### Figurenbeschreibung

Figuren 1A und 1B zeigen ein Blockdiagramm und ein zugehöriges Ablaufdiagramm gemäß einer bevorzugten Ausführungsform des Verfahrens gemäß der Erfindung; und
Figur 2 zeigt die Struktur eines Autoencoders, welcher zur Verwendung als Modell mit der Erfindung besonders geeignet ist.

### Detaillierte Beschreibung der Zeichnung

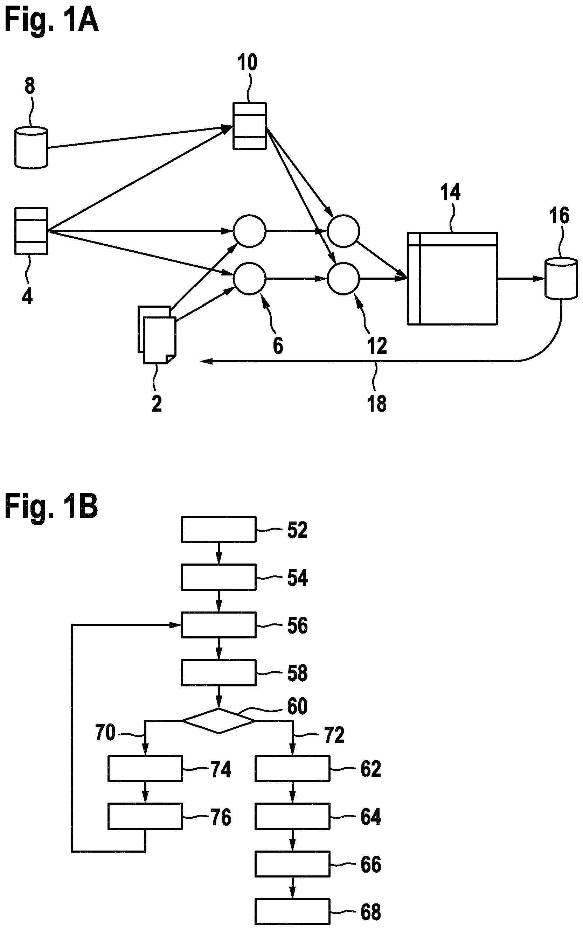

Eine beispielhafte Ausführungsform des Verfahrens zur Validierung und Auswahl eines Modelles zur Maschinenüberwachung gemäß der Erfindung wird im Folgenden anhand der Figuren 1A und 1B beschrieben. In Figur 1A ist ein entsprechendes Blockdiagramm dargestellt und in Figur 1B ist ein zugehöriges Ablaufdiagramm dargestellt.

Die Validierung und Auswahl erfolgt aus einem (ersten) Satz von Modellen, der mindestens ein Modell, bevorzugt mehrere Modelle, umfasst. In Figur 1A sind symbolisch zwei Modelle skizziert. Die Modelle sind durch Parameterkonfigurationen 2 charakterisiert, die die Modelle definieren. Die Parameterkonfiguration eines Modell bezeichnet hier Angaben zur Struktur, Werten bestimmter Parameter, Trainingsparametern (etwa eine Lernrate oder eine Anzahl von Iterationen in einem iterative Lernverfahren), Fehlermaß und Ähnliches des dem Modell zugrundliegenden Algorithmus, die, wenn der Algorithmus diese Parameterkonfiguration aufweist und mittels Trainingsdaten entsprechend den Trainingsparametern durch maschinelles Lernen trainiert wird, zu einem Modell führt, das dadurch bestimmt ist. Ausgehend von einem Algorithmus mit einer bestimmten Parameterkonfiguration wird also ein bestimmtes Modell durch das Training (mit den Trainingsdaten) erhalten. In diesem Sinne ist ein Modell durch die Parameterkonfiguration und die Trainingsdaten festgelegt.

Als Trainingsdatensatz wird ein Referenzdatensatz 4, der beispielsweise während des Betriebs der Maschine erfasste Betriebsparameter, z.B. Sensormessdaten, enthält, verwendet. Mittels der Referenzdaten 4 können die Modelle, die durch die Parameterkonfigurationen 2 definiert werden, während eines Trainings 6 trainiert werden. Entsprechend kann das Verfahren mit einem Definieren und einem Trainieren 52 des (ersten) Satzes von Modellen, der mindestens ein Modell umfasst, beginnen, wobei beim Definieren unterschiedliche Parameterkonfigurationen für unterschiedliche Modelle gewählt werden.

Aus den Referenzdaten 2 und einem Fehlerdatensatz 8, der Daten mit nicht zulässigen Betriebsparameter-Werten enthält, wird mindestens ein Prüfdatensatz 10 erzeugt, Schritt 54. In der Figur ist beispielhaft ein einzelner Prüfdatensatz 10 dargestellt, es ist aber ebenso möglich, mehrere Prüfdatensätze zu erzeugen. Zur Erzeugung des Prüfdatensatzes 10 wird vorteilhafterweise vom Referenzdatensatz 4 ausgegangen, und es wird in dem Referenzdatensatz, der Werte von erfassten Betriebsparameter enthält, mindestens ein Wert wenigstens eines Betriebsparameters, bevorzugt mehrere Werte mehrerer Betriebsparameter, durch einen entsprechenden unzulässigen Betriebsparameter-Wert aus dem Fehlerdatensatz 8 ersetzt. Wenn auch unzulässige Kombinationen von Betriebsparameter-Werten im Fehlerdatensatz enthalten sind, so werden die entsprechenden Kombinationen von Werten von Betriebsparametern des Referenzdatensatzes als ganzes ersetzt.

Auf diesen mindestens einen Prüfdatensatz 10 werden die im Training 6 erlernten Modelle in einem Prüfschritt 12 angewandt, Schritt 56. Dadurch wird eine Reihe von Fehlerwerten 14 bestimmt, wobei jeder Paarung von einem Modell mit einem Prüfdatensatz jeweils ein Fehlerwert entspricht. Der Fehlerwert ist der bezüglich eines Fehlermaßes des Modells gemessene Fehler, der sich bei Anwenden des Modells auf einen Prüfdatensatz ergibt. Der Fehlerwert gibt sozusagen die Abweichung bzw. den Abstand des jeweiligen Prüfdatensatzes von den durch das Modell trainierten Betriebszuständen wieder, und zwar so, wie der Abstand vom Modell selbst gemessen wird.

Für jedes Modell kann basierend auf den Fehlerwerten bezüglich der Gesamtheit der Prüfdatensätze eine Distanz bzw. ein Distanzwert des Modells von den Prüfdatensätzen bestimmt werden, Schritt 62. Basierend auf der Größe der Distanzwerte erfolgt eine Auswahl eines oder mehrerer Modelle, Schritt 64. Bevorzugt wird eine Anzahl von Modellen mit den größten Distanzwerten ausgewählt, wobei die Anzahl am meisten bevorzugt gleich Eins ist, d.h. es wird das Modell mit dem größten Distanzwert ausgewählt.

Das ausgewählte Modell bzw. die ausgewählten Modelle werden bevorzugt in einer Datenbank 16 gespeichert, Schritt 66. Ebenso kann die Parameterkonfiguration des ausgewählten Modells bzw. der ausgewählten Modelle in der Datenbank 16 gespeichert werden, da diese erfolgsversprechende Parameterkonfigurationen sind, die als Ausgangspunkt für Modelle zur Überwachung einer ähnlichen Maschine oder der gleichen Maschine in einem anderen Produktionszyklus dienen können. D.h. aus den gespeicherten Modellen kann ein neuer Satz von Modellen, z.B. für eine ähnliche Maschine, gewonnen werden (in Figur 1A durch einen Pfeil 18 symbolisiert) und mit diesen ebenfalls das erfindungsgemäße Verfahren durchgeführt werden.

Das ausgewählte Modell bzw. die ausgewählten Modelle können zur Überwachung des Betriebszustands einer Maschine und zum Erkennen einen anomalen Zustands der Maschine, z.B. einer Hydraulikanlage, eingesetzt werden, d.h. das Verfahren kann ein Einsetzen der ausgewählten Modelle zur Zustandsüberwachung und zur Erkennung anomaler Zustände bei einer Maschine umfassen, Schritt 68.

Der Distanzwert eines Modells kann durch verschiedene Methoden aus den Fehlerwerten des Modells bestimmt werden. Eine erste Möglichkeit ist, den Distanzwert so zu bestimmen, dass er dem kleinsten der Fehlerwerte des Modells entspricht, d.h. diesem gleicht. Der Fehlerwert gibt dann sozusagen an, wie weit jeder im Prüfdatensatz repräsentierte anomale Zustand mindestens von den durch das Modell modellierten Referenzzuständen entfernt ist. Weiter kann der größte der Fehlerwerte des Modells als Distanzwert gewählt werden. Der entsprechende Distanzwert ist ein Maß dafür, wie gut es einem Modell gelingt, zumindest einen Prüfdatensatz von den Referenzdaten zu trennen. Drittens kann der Distanzwert des Modells als ein Mittelwert der Fehlerwerte des Modells bestimmt werden. Bevorzugt wird der arithmetische Mittelwert verwendet. Es ist auch möglich, den geometrischen Mittelwert zu verwenden, so dass kleiner Fehlerwerte gegenüber größeren stärker gewichtet werden. Allgemeiner kann ein Mittelwert mit beliebig gewählten Gewichten verwendet werden, dadurch ist es z.B. möglich, verschiedene Prüfdatensätze verschieden zu gewichten.

Bei der Bestimmung der Fehlerwerte kann es vorkommen, dass der Fehlerwert bzw. Fehler eines Modells bezüglich mindestens eines der Prüfdatensätze kleiner ist als eine Fehlergrenze des Modells, die angibt, wie groß der Fehler bei Anwendung des Modells auf einen Datensatz maximal sein darf, so dass dieser Datensatz noch als zulässiger Betriebszustand klassifiziert wird. Anders gesagt ist der kleinste Fehlerwert des Modells kleiner als die Fehlergrenze. Der Fehlerwert wird hierbei durch ein Fehlermaß bzw. eine Fehlermetrik des Modells gemessen; typischerweise wird der Fehler bezüglich dieses Fehlermaßes beim Training des Modells minimiert. Unter der 'Fehlergrenze eines Modells' ist hierbei folgendes zu verstehen: Die Anwendung eines Modells auf einen während des Betriebs der Maschine erfassten Datensatz von Betriebsparametern wird normalerweise immer einen kleinen Fehler ergeben, selbst wenn der Betriebszustand richtig klassifiziert wurde, dies liegt bereits darin begründet, dass es innerhalb eines Betriebszustands immer zu kleinen Schwankungen der Betriebsparameter kommt, die den Betriebszustand charakterisieren. Ein Betriebszustand, der nur zu einem kleinen Fehler bei Anwendung des Modells führt, wird als zulässiger (d.h. normaler, nicht fehlerhafter) Betriebszustand betrachtet. Auch der Trainingsdatensatz wird im Allgemeinen einen nicht verschwindenden Fehler aufweisen. Daher ist mit jedem Modell typischerweise eine (maximale) Fehlergrenze verbunden, wobei davon ausgegangen wird, dass kein anomaler Zustand der Maschine vorliegt, solange der Fehler bei Anwendung des Modells auf dem Betriebszustand entsprechende Betriebsparameter kleiner als die Fehlergrenze ist. Die Fehlergrenze eines Modells gibt also den maximalen Fehler an, den das Modell bei der Anwendung auf einen Datensatz von Betriebsparametern aufweisen darf, so dass dieser als Datensatz eines gültigen, normalen Betriebszustands gewertet wird.

Liegt der Fehler bei Anwendung des Modells auf einen Prüfdatensatz, der nach Konstruktion einen anomaler Zustand der Maschine beschreibt, innerhalb der Fehlergrenze, so ist das Modell nicht in der Lage, diesen anomalen Zustand von einem regulären Zustand der Maschine zu unterscheiden. Im Prinzip ist es möglich, das erfindungsgemäße Verfahren anzuwenden, auch wenn einer der Fehlerwerte des Modells kleiner ist als die Fehlergrenze des Modells. Wird dieses Modell ausgewählt, so ist es teilweise nicht valide, klassifiziert also Prüfdatensätze teilweise als zulässig, d.h. klassifiziert diese falsch. Der Begriff "Validierung" ist also nicht so zu verstehen, dass entsprechende Modelle zwangsläufig alle Prüfdatensätze als anomale Zustände erkennen müssen, sondern allgemeiner so, dass Validierung die Auswahl besonders geeigneter Modelle im Sinne der Distanzmaße einschließt. Das Problem, dass Modelle teilweise nicht valide sind, kann gegebenenfalls durch die Auswahl (und den späteren Einsatz) mehrerer Modelle behoben werden, da eines der anderen ausgewählten Modelle in der Lage sein kann, den entsprechenden Prüfdatensatz richtig zu klassifizieren.

Allerdings wird in diesem Fall, d.h. wenn einer der Fehlerwerte eines Modells kleiner ist als die Fehlergrenze, bevorzugt das entsprechende Modell verworfen, Schritt 60. Verwerfen eines Modells heißt, dass dieses Modell von der Auswahl ausgeschlossen wird. Werden alle Modelle verworfen, so ist die Auswahl des Modells bzw. der Modelle mit dem größten Distanzwert leer, es wird dann also bei dieser bevorzugten Ausführung kein Modell als geeignetes Modell validiert.

Alternativ, entsprechend der in Figur 1B gezeigten bevorzugten Ausführungsform, kann, wenn dies der Fall ist, d.h. wenn alle Modelle verworfen werden, ein geänderter Satz von Modellen definiert werden, Schritt 74, der im weiteren als zweiter Satz von Modellen bezeichnet wird, um ihn vom ursprünglichen, ersten Satz von Modellen zu unterscheiden. Der zweite Satz von Modellen enthält, wie bereits der erste Satz von Modellen, mindestens ein Modell.

Im Einzelnen wird zunächst in Schritt 60 bestimmt, ob alle Modelle verworfen wurden, Schritt 70, oder ob nicht alle Modelle verworfen wurden, Schritt 72. Falls nicht alle Modelle verworfen wurden, Schritt 72, wird mit Schritt 62 fortgefahren, d.h. mit dem Bestimmen der Distanzwerte. Falls alle Modelle verworfen wurden, Schritt 70, wird mit dem Schritt 74 fortgefahren, d.h. dem Definieren des zweiten Satzes von Modellen.

Ebenso ist es möglich (anders als in Figur 1B dargestellt), zunächst die Distanzwerte zu bestimmen und die Modelle erst später zu verwerfen. In diesem Fall kann die Entscheidung, welche Modelle verworfen werden sollen, auf den Distanzwerten basieren; z.B. in dem Modelle verworfen werden, deren Distanzwert kleiner als ein vorbestimmter Mindest-Distanzwert ist.

Die Modelle des zweiten Satzes von Modellen werden, wie bereits vorstehend in Zusammenhang mit dem ersten Satz von Modellen beschrieben, durch Parameterkonfigurationen definiert bzw. charakterisiert. Unterschiedliche Modelle des zweiten Satzes von Modellen weisen unterschiedliche Parameterkonfigurationen auf. Ebenso sind die Parameterkonfigurationen der Modelle des zweiten Satzes von Modellen unterschiedlich von den Parameterkonfigurationen des ersten Satzes von Modellen.

Die Modelle des zweiten Satzes von Modellen können entsprechend ihrer jeweiligen Parameterkonfiguration mittels des Referenzdatensatzes trainiert werden, Schritt 76. Anschließend können die Modelle des zweiten Satzes von Modelle, wie bereits vorher die Modelle des ersten Satzes von Modellen auf die Prüfdatensätze angewendet werden, Schritt 56, um Fehlerwerte für die Modelle des zweiten Satzes von Modellen zu bestimmen, d.h. es wird zum entsprechenden Schritt des Verfahren zurückgegangen. Auch die weiteren Schritte (Verwerfen von Modellen, Schritt 58, Bestimmen einer Distanz für jedes Modell, Schritt 62, Auswahl eines Modells, Schritt 64) laufen wie bereits oben beschrieben ab, mit dem Unterschied, dass jetzt die Modelle des zweiten Satzes von Modellen anstatt der Modelle des ersten Satzes von Modellen verwendet werden. Falls auch im zweiten Satz von Modellen alle Modelle verworfen werden sollten, kann ein dritter Satz von Modellen definiert werden, usw.

Bevorzugt enthalten der erste Satz von Modellen und gegebenenfalls der zweite und weitere Sätze von Modellen jeweils mindestens zwei Modelle.

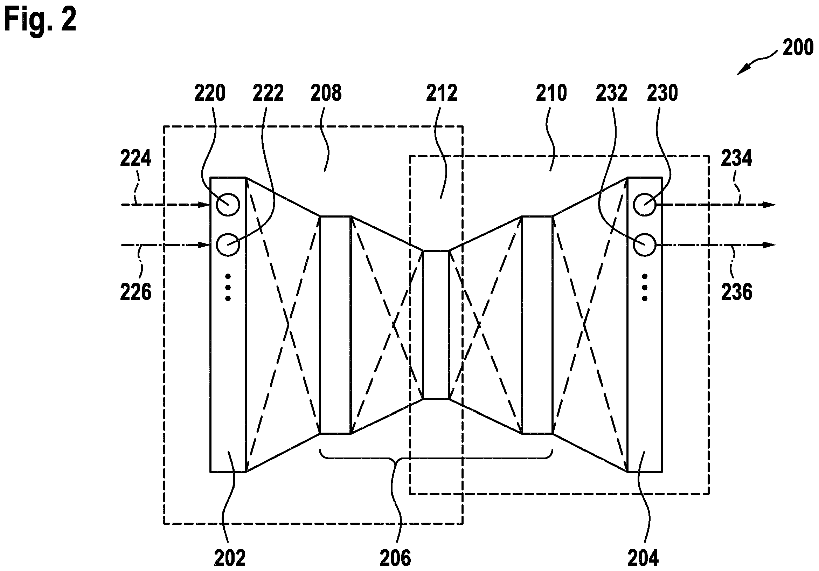

Figur 2 zeigt eine vereinfachte Darstellung der Struktur eines Autoencoders, wie er beispielsweise als Modell in dem Überwachungsverfahren, auf dem die vorliegende Erfindung aufbaut, verwendet werden kann. Im Prinzip können mit dem Autoencoder Referenzzustände der Maschine modelliert werden. Der Autoencoder 200 weist eine Eingabeschicht 202, eine Ausgabeschicht 204 und mehrere verdeckte Schichten 206 (in Figur 2 sind beispielhaft drei verdeckte Schichten gezeigt, es ist aber auch eine andere Anzahl möglich) auf. Jede der Schichten 202, 204, 206 umfasst ein oder mehrere Neuronen (von denen in Figur 2 nur einige Neuronen 220, 222, 230, 232 dargestellt sind). Die Neuronen der Ausgabeschicht 204 haben die gleiche Bedeutung wie die Neuronen der Eingabeschicht 202, d.h. die Werte an der Ausgabeschicht sollen den an der Eingabeschicht eingegebenen Werten entsprechen. Die Schichten 202, 204, 206, genauer die in den Schichten enthaltenen Neuronen, sind untereinander durch nicht weiter dargestellte (gewichtete) Kanten verbunden. Der Autoencoder codiert die Eingaben auf einer Codier-Seite 208 und decodiert sie auf einer Decodier-Seite 210 des Autoencoders 200. In einer oder in mehreren der verdeckten Schichten 206 wird ein Code gebildet, der die Eingabedaten in einer dimensional reduzierten Form repräsentiert.

Beim Training werden die Gewichte der Kanten des Autoencoders, der ein neuronales Netz ist, so angepasst, dass die an den Neuronen der Ausgabeschicht 204 ausgegebenen Ausgabewerte bezüglich eines Fehlermaßes möglichst nah an den Eingabewerten liegen. Dazu werden die Gewichte so geändert, dass ein geeignetes Fehlermaß minimiert wird. Als Fehlermaß kann etwa die Wurzel des mittleren quadratischen Fehlers der Einzelwerte verwendet werden.

Beispielhaft sind in Figur 2 in der Eingabeschicht 202 Eingabe-Neuronen 220, 222 und in der Ausgabeschicht 204 Ausgabe-Neuronen 230, 232 dargestellt. Umfassen die Datensätze etwa Messungen von Druck und Temperatur (z.B. in einer Hydraulikanlage), wird der Wert des Druckes p an einem der Eingabe-Neuronen 220 eingegeben, symbolisiert durch einen Pfeil 224, und der Wert der Temperatur T am anderen Eingabe-Neuron 222 eingegeben, symbolisiert durch einen Pfeil 226. Der Autoencoder (also das Modell) bildet diese an den Eingabe-Neuronen eingegebenen Eingabewerte, und weitere nicht dargestellte Eingabewerte, die weiteren Betriebsparametern in den Datensätzen entsprechen, auf Ausgabewerte an den Ausgabe-Neuronen 230, 232 ab. Hierbei soll an einem Ausgabe-Neuron 230 ein dem Druck entsprechender Wert p' ausgegeben werden, symbolisiert durch einen Pfeil 234, und am anderen Ausgabe-Neuron 232 ein der Temperatur entsprechender Wert T' ausgegeben werden, symbolisiert durch einen Pfeil 236. Der Autoencoder wird so trainiert, dass die Ausgabewerte p', T', und weitere nicht dargestellte Ausgabewerte, möglichst nahe bei den entsprechenden Eingabewerten p, T liegen, d.h. der Rekonstruktionsfehler soll bezüglich eines geeigneten Fehlermaßes möglichst klein sein. Dabei werden in einem iterativen Verfahren die Gewichte so geändert, dass das Fehlermaß minimiert wird. Wie groß die Änderung der Gewichte in jeder Iteration ist, wird durch eine Lernrate bestimmt, die sich möglicherweise von Iteration zu Iteration ändern, z.B. abnehmen, kann.

Für das Beispiel eines Autoencoders kann die Parameterkonfiguration eines Modells umfassen: die Anzahl der Schichten, die Anzahl der Neuronen in jeder der Schichten, eine Angabe der Verbindungen zwischen den Neuronen (d.h. wie verlaufen die Kanten), Initialisierungswerte für die Gewichte, ein Lernrate, eine maximale Anzahl beim Training durchzuführender Iterationen (Epochen), ein Fehlermaß. Unterschiedliche Werte für die in der Parameterkonfiguration umfassten Parameter eines Modells resultieren im Allgemeinen nach dem Training in unterschiedlichen Modellen bzw. Algorithmen. Beispielsweise können aus unterschiedlichen Parameterkonfigurationen Autoencoder mit unterschiedlichen letztendlichen Gewichten resultieren, selbst wenn die Struktur der Autoencoder (Anzahl Schichten, Anzahl Neuronen, Verbindungen/Kanten zwischen den Neuronen) dieselbe ist und sie sich lediglich in anderen Parametern der Parameterkonfiguration (etwa der Initialisierung, der Lernrate oder dem Fehlermaß) unterscheiden.

Es sei erneut darauf hingewiesen, dass strukturelle Einzelheiten der verwendeten Modelle nicht essentiell für die Ausführung der vorliegenden Erfindung sind. Autoencoder stellen lediglich eine Möglichkeit zur Verwirklichung geeigneter Modelle dar. Figur 2 wurde vor allem der Vollständigkeit halber und zum besseren Verständnis der Erfindung beigefügt.

## Patentansprüche

1. Verfahren zur Validierung und Auswahl mindestens eines Modells zur Überwachung des Zustands einer Maschine aus einem ersten Satz von Modellen, der mindestens ein Modell umfasst, wobei die Modelle mittels maschinellem Lernen trainierte Algorithmen sind, die Betriebszustände einer Maschine basierend auf Betriebsparametern, die Betriebszustände der Maschine charakterisieren, modellieren, wobei die Modelle mittels eines Referenzdatensatzes der Betriebsparameter trainiert werden und durch Parameterkonfigurationen charakterisiert sind, die für unterschiedliche Modelle unterschiedlich sind, und wobei die Validierung und Auswahl mittels unzulässiger Betriebsparameter-Werte erfolgt, umfassend
a) Erzeugen (54) eines oder mehrerer Prüfdatensätze aus dem Referenzdatensatz, wobei jeweils mindestens ein Wert wenigstens eines Betriebsparameters in dem Referenzdatensatz durch einen entsprechenden unzulässigen Betriebsparameter-Wert ersetzt wird;
b) für jedes Modell aus dem Satz von Modellen:
Anwenden (56) des Modells auf jeden Prüfdatensatz des einen oder der mehreren Prüfdatensätze, um Fehlerwerte des Modells bezüglich jedem Prüfdatensatz zu bestimmen, und
Bestimmen (62) eines Distanzwertes des Modells basierend auf den Fehlerwerten des Modells;
c) Auswählen (64) eines oder mehrerer Modelle basierend auf der Größe der Distanzwerte.

2. Verfahren nach Anspruch 1, wobei eine Anzahl von Modellen mit den größten Distanzwerten ausgewählt wird; wobei bevorzugt das Modell mit dem größten Distanzwert ausgewählt wird.

3. Verfahren nach einem der vorstehenden Ansprüche, wobei in Schritt b) der Distanzwert des jeweiligen Modells so bestimmt wird, dass er einem Wert entspricht, der ausgewählt ist aus: dem kleinsten der Fehlerwerte des Modells, dem größten der Fehlerwerte des Modells, dem Mittelwert der Fehlerwerte des Modells; wobei bevorzugt für alle Modelle der Distanzwert mit der gleichen Methode bestimmt wird.

4. Verfahren nach einem der vorstehenden Ansprüche, weiterhin umfassend:
Definieren und Trainieren (52) des ersten Satzes von Modellen, der mindestens ein Modell umfasst, wobei beim Definieren unterschiedliche Parameterkonfigurationen für unterschiedliche Modelle gewählt werden.

5. Verfahren nach einem der vorstehenden Ansprüche, wobei Schritt b) weiterhin umfasst:
Verwerfen (58) des Modells, falls mindestens einer der Fehlerwerte kleiner als eine vorbestimmte maximale Fehlergrenze des Modells ist.

6. Verfahren nach Anspruch 5, weiter umfassend, wenn alle Modelle verworfen werden:
Definieren (74) eines zweiten Satzes von Modellen, der mindestens ein Modell umfasst, wobei unterschiedliche Modelle mit unterschiedlichen Parameterkonfigurationen definiert werden, und die Parameterkonfigurationen der Modelle des zweiten Satzes von Modellen verschieden von den Parameterkonfigurationen der Modelle des ersten Satzes von Modellen sind;
Trainieren (76) der Modelle des zweiten Satzes von Modellen mittels des Referenzdatensatzes; und
Durchführen der Schritte b) und c) für den zweiten Satz von Modellen.

7. Verfahren nach einem der vorstehenden Ansprüche, wobei die Parameterkonfiguration der Modelle eine Initialisierungsparameter, eine Lernrate, und/oder ein Fehlermaß umfasst.

8. Verfahren nach einem der vorstehenden Ansprüche, wobei die Modelle als neuronale Netze, insbesondere Autoencoder, implementiert sind, wobei die Parameterkonfiguration eine Anzahl von Schichten, eine Anzahl von Neuronen für jede der Schichten, und/oder eine Anzahl von Epochen umfasst.

9. Verfahren nach einem der vorstehenden Ansprüche, weiterhin umfassend:
Speichern (66) der Parameterkonfiguration des ausgewählten mindestens einen Models.

10. Recheneinheit, die dazu eingerichtet ist, ein Verfahren nach einem der vorstehenden Ansprüche durchzuführen.

11. Computerprogramm, das eine Recheneinheit veranlasst, ein Verfahren nach einem der Ansprüche 1 bis 9 durchzuführen, wenn es auf der Recheneinheit ausgeführt wird.

12. Maschinenlesbares Speichermedium mit einem darauf gespeicherten Computerprogramm nach Anspruch 11.

## Claims

1. Method for validating and selecting at least one model for monitoring the state of a machine from a set of models comprising at least one model, wherein the models are algorithms which are trained by means of machine learning and model operating states of a machine on the basis of operating parameters characterizing operating states of the machine, wherein the models are trained by means of a reference data set of the operating parameters and are **characterized by** parameter configurations which are different for different models, and wherein the validation and selection are carried out by means of impermissible operating parameter values, comprising
a) generating (54) one or more test data sets from the reference data set, wherein at least one value of at least one operating parameter in the reference data set is respectively replaced with a corresponding impermissible operating parameter value;
b) for each model from the set of models:
applying (56) the model to each test data set of the one or more test data sets in order to determine error values of the model for each test data set, and
determining (62) a distance value of the model on the basis of the error values of the model;
c) selecting (64) one or more models on the basis of the magnitude of the distance values.

2. Method according to Claim 1, wherein a number of models with the largest distance values are selected, wherein the model with the largest distance value is preferably selected.

3. Method according to one of the preceding claims, wherein, in step b), the distance value of the respective model is determined in such a manner that it corresponds to a value selected from: the smallest of the error values of the model, the largest of the error values of the model, the mean value of the error values of the model, wherein the distance value is preferably determined for all models using the same method.

4. Method according to one of the preceding claims, also comprising:
defining and training (52) the first set of models comprising at least one model, wherein different parameter configurations are selected for different models during the defining process.

5. Method according to one of the preceding claims, wherein step b) also comprises:
rejecting (58) the model if at least one of the error values is less than a predetermined maximum error limit of the model.

6. Method according to Claim 5, also comprising, if all models are rejected:
defining (74) a second set of models comprising at least one model, wherein different models with different parameter configurations are defined, and the parameter configurations of the models in the second set of models differ from the parameter configurations of the models in the first set of models;
training (76) the models in the second set of models by means of the reference data set; and
carrying out steps b) and c) for the second set of models.

7. Method according to one of the preceding claims, wherein the parameter configuration of the models comprises an initialization parameter, a learning rate, and/or an error measure.

8. Method according to one of the preceding claims, wherein the models are implemented as neural networks, in particular autoencoders, wherein the parameter configuration comprises a number of layers, a number of neurons for each of the layers, and/or a number of epochs.

9. Method according to one of the preceding claims, also comprising:
storing (66) the parameter configuration of the selected at least one model.

10. Computing unit configured to carry out a method according to one of the preceding claims.

11. Computer program which causes a computing unit to carry out a method according to one of Claims 1 to 9 when it is executed on the computing unit.

12. Machine-readable storage medium having a computer program according to Claim 11 is stored thereon.

## Revendications

1. Procédé permettant de valider et de sélectionner au moins un modèle pour la surveillance de l'état d'une machine parmi un premier ensemble de modèles qui comprend au moins un modèle, les modèles étant des algorithmes entraînés au moyen d'un apprentissage machine qui modélisent des états de fonctionnement d'une machine sur la base de paramètres de fonctionnement qui caractérisent les états de fonctionnement de la machine, dans lequel les modèles sont entraînés au moyen d'un ensemble de données de référence des paramètres de fonctionnement et sont **caractérisés par** des configurations de paramètre qui sont différentes pour différents modèles, et dans lequel la validation et la sélection sont effectuées au moyen de valeurs de paramètre de fonctionnement inadmissibles, comprenant les étapes consistant à
a) générer (54) un ou plusieurs ensembles de données de contrôle à partir de l'ensemble de données de référence, respectivement au moins une valeur d'au moins un paramètre de fonctionnement dans l'ensemble de données de référence étant remplacée par une valeur de paramètre de fonctionnement inadmissible correspondante ;
b) pour chaque modèle de l'ensemble de modèles :
appliquer (56) le modèle à chaque ensemble de données de contrôle dudit un ou des plusieurs ensembles de données de contrôle pour déterminer des valeurs d'erreur du modèle par rapport à chaque ensemble de données de contrôle, et
déterminer (62) une valeur de distance du modèle sur la base des valeurs d'erreur du modèle ;
c) sélectionner (64) un ou plusieurs modèles sur la base de la grandeur des valeurs de distance.

2. Procédé selon la revendication 1, dans lequel un nombre de modèles ayant les plus grandes valeurs de distance est sélectionné ; dans lequel on sélectionne de préférence le modèle avec la plus grande valeur de distance.

3. Procédé selon l'une quelconque des revendications précédentes, dans lequel à l'étape b), la valeur de distance du modèle respectif est déterminée de façon à correspondre à une valeur qui est sélectionnée parmi : la plus petite des valeurs d'erreur du modèle, la plus grande des valeurs d'erreur du modèle, la moyenne des valeurs d'erreur du modèle ; dans lequel de préférence la valeur de distance est déterminée par la même méthode pour tous les modèles.

4. Procédé selon l'une quelconque des revendications précédentes, comprenant en outre :
la définition et l'entraînement (52) du premier ensemble de modèles qui comprend au moins un modèle, dans lequel, lors de la définition, différentes configurations de paramètre sont sélectionnées pour différents modèles.

5. Procédé selon l'une quelconque des revendications précédentes, dans lequel l'étape b) comprend en outre :
le rejet (58) du modèle si au moins l'une des valeurs d'erreur est inférieure à une limite d'erreur maximale prédéterminée du modèle.

6. Procédé selon la revendication 5, comprenant en outre, si tous les modèles sont rejetés :
la définition (74) d'un deuxième ensemble de modèles qui comprend au moins un modèle, dans lequel différents modèles avec différentes configurations de paramètres sont définis, et les configurations de paramètres des modèles du deuxième ensemble de modèles sont différentes des configurations de paramètres des modèles du premier ensemble de modèles ;
l'entraînement (76) des modèles du deuxième ensemble de modèles au moyen de l'ensemble de données de référence ; et
l'exécution des étapes b) et c) pour le deuxième ensemble de modèles.

7. Procédé selon l'une quelconque des revendications précédentes, dans lequel la configuration de paramètres des modèles comprend un paramètre d'initialisation, un taux d'apprentissage et/ou une mesure d'erreur.

8. Procédé selon l'une quelconque des revendications précédentes, dans lequel les modèles sont mis en œuvre sous la forme de réseaux neuronaux, en particulier de codeurs automatiques, dans lequel la configuration de paramètres comprend un nombre de couches, un nombre de neurones pour chacune des couches et/ou un nombre d'époques.

9. Procédé selon l'une quelconque des revendications précédentes, comprenant en outre :
la mémorisation (66) de la configuration de paramètres du au moins un modèle sélectionné.

10. Unité de calcul qui est conçue pour exécuter un procédé selon l'une quelconque des revendications précédentes.

11. Programme informatique qui fait qu'une unité de calcul exécute un procédé selon l'une quelconque des revendications 1 à 9 lorsqu'il est exécuté sur l'unité de calcul.

12. Support de stockage lisible par machine avec un programme informatique selon la revendication 11 stocké sur celui-ci.
